# EUROPÄISCHE PATENTSCHRIFT

(11) **EP 1 132 322 B1**
(45) Veröffentlichungstag und Bekanntmachung des Hinweises auf die Patenterteilung: **26.11.2014**
(21) Anmeldenummer: 00119311.9
(22) Anmeldetag: 06.09.2000
(51) Int. Cl.: B65G 47/91, B29C 51/26

(54) **Vorrichtung zur Aufnahme von Kunststoffplatten unterschiedlicher Grösse**
Device for lifting of plastic plates of different sizes
Dispositif pour soulever des plaques en matière thermoplastique de tailles différentes

(30) Priorität: 15.10.1999 DE 19949854
(43) Veröffentlichungstag der Anmeldung: 12.09.2001
(73) Patentinhaber: GEISS Aktiengesellschaft, 96145 Sesslach (DE)
(72) Erfinder: Geiss, Manfred, 96145 Sesslach (DE)
(74) Vertreter: Isarpatent

(56) Entgegenhaltungen:
- EP-A- 0 348 311
- DE-A- 3 018 082
- DE-A- 3 223 171
- DE-A- 3 628 381
- FR-A- 2 639 335

## Beschreibung

Die Erfindung betrifft eine Vorrichtung zur Aufnahme von Kunststoffplatten unterschiedlicher Größe, deren Transport und deren Ablage in eine Vakuumformmaschine.

Zur Umformung von Thermoplasten besitzen moderne Vakuumformmaschinen sogenannte Beschickungseinrichtungen, welche eine Kunststoffplatte von einem Plattenstapel entnehmen und in die Formstation der Vakuumformmaschine hinein transportieren Dabei ist es bekannt, zum Aufnehmen der Kunststoffplatte zahlreiche Sauger zu verwenden, welche jeweils die oberste Kunststoffplatte des Plattenstapels ansaugen. Da Kunststoffplatten unterschiedlicher Größe in Vakuumformmaschinen verarbeitet werden müssen, ist es erforderlich, Vorkehrungen zu treffen, um Kunststoffplatten unterschiedlichen Formats zuverlässig aufzunehmen, zu transportieren und in der Formstation der Vakuumformmaschine abzulegen.

Üblich ist es bisher, zur Abstimmung der benötigten Saugeinrichtungen auf die Größe des Kunststoffplattenzuschnitts zahlreiche Sauger auf einzelne Saugerleisten zu verteilen, welche beispielsweise aus einem die Vakuumverbindung herstellenden Vierkantrohr bestehen. Durch entsprechende Verschiebung dieser Saugleisten kann eine Größenanpassung an einen zu handhabenden Kunststoffplattenzuschnitt in einer Richtung erreicht werden. Eine Anpassung in der üblicherweise orthogonal zu dieser Richtung verlaufenden zweiten Richtung wird dann dadurch vorgenommen, dass man ebenfalls Saugerleisten vorsieht, bei denen überflüssige Saugeinrichtungen entfernt und die vorhandenen Bohrungen verschlossen werden. Ersichtlich ist diese formatanpassende Umrüstung außerordentlich zeitaufwendig und unflexibel, wobei ein hohes Maß an manueller Arbeit und ein sorgfältiges und zuverlässiges Arbeiten erforderlich ist.

Eine alternative vorbekannte Lösung zur Anpassung der Aufnahmevorrichtung an das Format der zu handhabenden Kunststoffplatte besteht darin, dass man für jede Größe der Kunststoffplatten eine entsprechende Saugerplatte installiert, welche entsprechend eine optimale Anzahl von Saugeinrichtungen aufweist, die in Anordnung und Lage auf das gewünschte Format abgestimmt ist. Nachteilig ist an dieser Lösung, dass eine Vielzahl unterschiedlicher Saugerplatten vorzusehen und zu bevorraten sind und in aufwendiger Weise jeweils entsprechend ausgetauscht werden müssen.

Aus der FR 2 639 335 A ist eine Vorrichtung bekannt, welche eine Aufnahmeplatte besitzt, die eine Anordnung von einzelnen Saugeinrichtungen aufweist. Hierzu weist jede Saugeinrichtung ein jeweils zugeordnetes Magnetventil auf, das mit einem Vakuum verbindbar ist. Dabei erfolgt die Ansteuerung der jeweiligen Magnetventile jeweils abhängig von Sensoren, die den Saugeinrichtungen jeweils zugeordnet sind.

Gemäß dem Oberbegriff des Anspruchs 1 ist aus der DE 36 28 381 A1 ein Sauggreifer zur Handhabung quaderförmiger Werkstücke mit einer Einrichtung bekannt, die an der Saugfläche mit einer Mehrzahl von Saugeinrichtungen Unterdruck erzeugt. Dabei sind die Sauger stets in einer Reihe angeordnet und mit Unterdruck versorgbar.

Der Erfindung liegt die Aufgabe zugrunde, eine Vorrichtung der eingangs genannten Art verfügbar zu machen, die ohne manuelle Umrüstung unterschiedliche Formate von Kunststoffplatten sicher und zuverlässig zu handhaben vermag-. Erfindungsgemäß wird diese Aufgabe durch die Patentanspruch 1 genannten Merkmale gelöst. Bevorzugte Merkmale, die die Erfindung vorteilhaft weiterbilden, sind den nachgeordneten Patentansprüchen zu entnehmen.

Aufgrund der erfindungsgemäßen Ausgestaltung wird demgemäß vorteilhaft eine Vorrichtung zur Aufnahme von Kunststoffplatten unterschiedlicher Größe für den Transport und die Ablage in eine Formstation einer Vakuumformmaschine verfügbar gemacht, die aus einer Aufnahme- platte mit einer Anordnung einzelner Saugeinrichtungen besteht, welche entsprechend dem Format der aufzunehmenden Kunststoffplatte mittels eines Ventils gleichzeitig ansteuerbar sind.

Gemäß einer bevorzugten Ausgestaltung der Erfindung sind die Saugeinrichtungen gruppenweise an einen Ventilblock angeschlossen, wobei für das Schalten der Ventile des Ventilblocks eine Steuereinheit vorgesehen ist. Hierdurch lässt sich vorteilhaft eine Verbindung mit einer zentralen Steuereinheit der Vakuumformmaschine erreichen, die über eine Software ermöglicht, dass bei Formatwechsel genau diejenigen Saugeinrichtungsgruppen und/oder Saugeinrichtungspaare eingeschaltet werden, die für das jeweilige Format der Kunststoffplatte benötigt werden.

Gemäß einer bevorzugten Ausgestaltung der Erfindung ist die Steuereinheit mit dem Ventilblock über eine Busanschaltung verbunden. Hierdurch ist vorteilhaft nur ein einziges Steuerkabel und ein einziger Vakuumversorgungsschlauch für die mobile Aufnahmevorrichtung erforderlich, wobei die Verteilung auf die Ansteuerung der einzelnen Ventileinheiten innerhalb des Ventilblockes erfolgt. Die Steuereinheit für die Aufnahmevorrichtung, die mit dem Ventilblock über eine Busanschaltung verbunden ist, kann nach einer bevorzugten weiteren Ausgestaltung der Erfindung in eine zentrale Steuereinheit der Vakuumformmaschine integriert sein. Hierdurch besteht die Möglichkeit, auch eine programmierbare Steuerung vorzusehen, um einzelne Saugeinrichtungsgruppen individuell oder gleichzeitig anzusteuern.

Gemäß einer weiteren Ausgestaltung ist vorgesehen, dass die für eine Mindestplattengröße vorgesehenen Saugeinrichtungen durch ein einziges Ventil des Ventilblocks ansteuerbar sind. Hierdurch verringert sich vorteilhaft der Ansteueraufwand und die Größe des Ventilblocks.

Die Saugeinrichtungen sind bei einer weitern Ausgestaltung vorteilhaft an der Aufnahmeplatte in regelmäßig verteilter Anordnung vorgesehen, vorzugsweise symmetrisch zu wenigstens einer Symmetrieachse der Aufnahmeplatte. Dabei können vorteilhaft auch symmetrisch an der

Aufnahmeplatte angeordnete Saugeinrichtungen paarweise oder gruppenweise auf ein Ventil des Verteilerblocks zusammengeschaltet sein.

Mit der erfindungsgemäßen Vorrichtung lässt sich somit vorteilhaft ein Transport vom Plattenstapel einer Beschickungseinrichtung in eine Formstation einer Vakuumformmaschine verwirklichen, wobei vorteilhaft die Größe der Aufnahmeplatte im Bereich der Größe des maximalen Kunststoffplattenzuschnitts liegt und mit einer großen Anzahl von Saugeinrichtungen fest bestückt ist. Falls die zu verarbeitenden Plattenzuschnitte mittig zur Aufnahmeplatte liegen können, ist es zudem vorteilhaft möglich, durch paarweises Zusammenschalten von Saugeinrichtungen auf ein Ventil des Ventilblocks die entsprechende Ansteuerung zu vereinfachen, wobei weiterhin auch alle Saugeinrichtungen im Bereich eines Mindestmaterialzuschnitts über ein einziges Ventil des Ventilblocks stets angesteuert werden können. Bei Zunahme der Größe des Materialzuschnitts werden dann sukzessiv zirkulär bzw. radial entsprechende weitere Saugeinrichtungen zugeschaltet, die für die jeweilige optimale Handhabung der Kunststoffplattte erforderlich sind. Diese sukzessive, dem Format des zu verarbeitenden Materialzuschnitts folgende Vergrößerung des Ansaugsbereichs seitens der Aufnahmeplatte lässt sich dann individuell zu der maximal handhabbaren Größe durch entsprechende Ansteuerung der Saugeinrichtungen problemlos und in einer auch für mobile Einsätze geeigneten Form vergrößern.

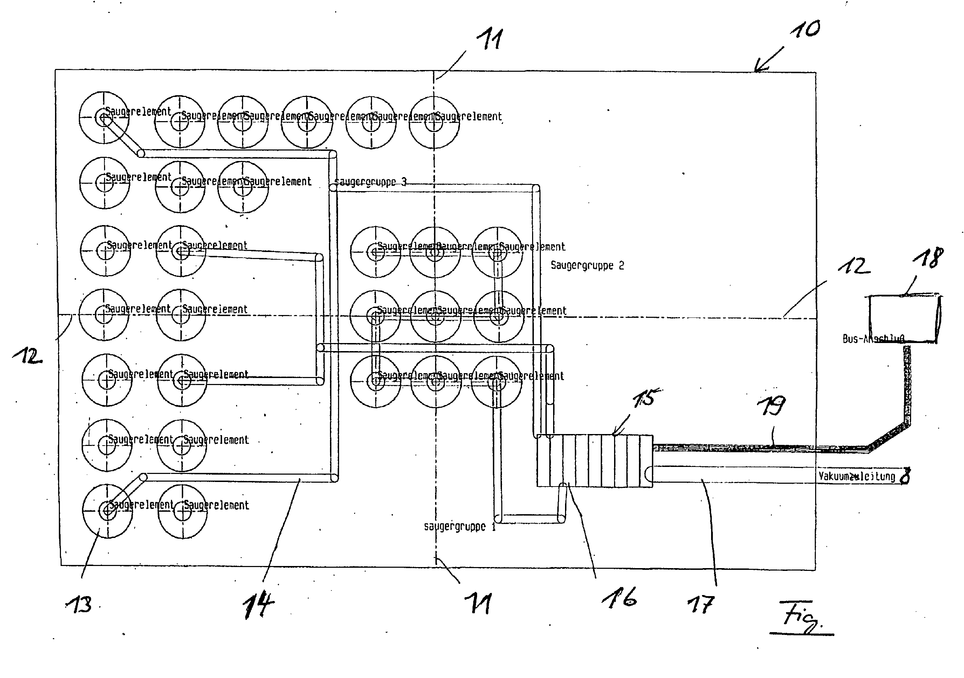

Nachfolgend wir die Erfindung anhand eines Ausführungsbeispiels unter Bezugnahme auf die beigefügte Zeichnung näher erläutert.

In der Zeichnung ist schematisiert in Draufsicht eine Aufnahmeplatte 10 dargestellt, die einen rechteckigen Grundriss mit einer Symmetrielinie 11-11 und einer senkrecht dazu verlaufenden Symmetrielinie 12-12 aufweist.

Unter der Aufnahmeplatte 10 sind, regelmäßig voneinander beanstandet, Saugeinrichtungen 13 in Form von Saugern befestigt, die über eine schematisch angedeutete Rohrleitung 14 mit einem Ventilblock 15 verbunden sind. Zur Vereinfachung sind in der Figur nicht alle Saugeinrichtungen 13 mit einer Saugleitung 14 verbunden.

Wie aus der Figur ebenfalls entnehmbar ist, sind mehrere Saugeinrichtungen 13 zu Sauggruppen zusammengeschlossen, so beispielweise im mittleren Bereich neun Saugeinrichtungen 13, die für eine Kunststoffplatte minimaler Größe gemeinsam angesteuert werden.

Der Ventilblock 15 besteht aus einer großen Anzahl von Ventilen 16, die bei Ansteuerung einen Durchlaß zu einer Vakuumleitung 17 freigeben. Für die Ansteuerung ist eine Steuereinheit 18 vorgesehen, die in die zentrale Steuereinheit einer Vakuumformmaschine integriert sein kann. Diese Steuereinheit 18 ist über einen Busanschluß 19 mit dem Ventilblock 15 verbunden. Hierdurch erfolgt die Ansteuerung des Ventilblocks 15 über einen einzigen Steuerdraht, und die Verteilung auf die Ansteuerung der Einzelnen Ventile 16 wird innerhalb des Ventilblocks 15 vorgenommen.

Die Abmessung der Aufnahmeplatte 10 entspricht der größtmöglichen zu verarbeitenden Kunststoffplatte. Zur Anpassung der zu aktivierenden Saugeinrichtungen 13 werden abhängig von der jeweiligen Größe der zu verarbeitenden Kunststoffplatte die entsprechenden Saugeinrichtungen 13 über die Steuereinrichtung 18 mit Vakuum beaufschlagt. Dabei kann eine Software dafür sorgen, dass bei Formatwechsel genau diejenigen Saugeinrichtungsgruppen und/oder Saugeinrichtungspaare eingeschaltet werden, die für den so verarbeiteten Plattenzuschnitt benötigt werden. Die Steuerung ist vorteilhaft so programmierbar, dass eine Busanschaltung es erlaubt, jede/s einzelne Saugeinrichtungsgruppe oder Saugeinrichtungspaar individuell anzusteuern. Durch eine Integration der Steuereinheit 18 in eine zentrale Steuereinheit der Vakuumformmaschine ist es vorteilhaft überdies möglich, entsprechende Formatinformationen direkt in die Saugeinrichtungsansteuerung schnell und zuverlässig umzusetzen.

## Patentansprüche

1. Vorrichtung zur Aufnahme von Kunststoffplatten unterschiedlicher Größe für den Transport und die Ablage in eine Vakuumformmaschine, mit:
einer Aufnahmeplatte (10), die eine Anordnung von einzelnen Saugeinrichtungen (13) aufweist,
wobei
mehrere Saugeinrichtungen (13) zu Sauggruppen zusammengeschlossen sind, wobei die einzelnen Saugeinrichtungen (13) entsprechend dem Format der aufzunehmenden Kunststoffplatte ansteuerbar (15-19) sind, **dadurch gekennzeichnet, dass** im mittleren Bereich der Aufnahmeplatte (10) neun Saugeinrichtungen (13) zu einer Sauggruppe in einem Quadrat von 3 mal 3 Saugeinrichtungen (13) regelmäßig verteilt angeordnet sind, welche für eine Kunststoffplatte minimaler Größe gemeinsam ansteuerbar sind.

2. Vorrichtung nach Anspruch 1,
**dadurch gekennzeichnet, dass**
die Saugeinrichtungen (13) gruppenweise an einen Ventilblock (15) angeschlossen sind.

3. Vorrichtung nach Anspruch 2,
**dadurch gekennzeichnet, dass**
für das Schalten von Ventilen (16) des Ventilblocks (15) eine Steuereinheit (18) vorgesehen ist.

4. Vorrichtung nach Anspruch 3,
**dadurch gekennzeichnet, dass**
die Steuereinheit (18) mit dem Ventilblock (15) über eine Busanschaltung (19) verbunden ist.

5. Vorrichtung nach Anspruch 3 oder 4,
**dadurch gekennzeichnet, dass**
durch die Steuereinheit (18) Gruppen von Saugeinrichtungen (13) gleichzeitig ansteuerbar sind.

6. Vorrichtung nach einem der vorangehenden Ansprüche,
**dadurch gekennzeichnet, dass**
die für eine Mindestkunststoffplattengröße vorgesehenen Saugeinrichtungen (13) durch ein einziges Ventil (16) des Ventilblocks (15) ansteuerbar sind.

7. Vorrichtung nach einem der vorangehenden Ansprüche,
**dadurch gekennzeichnet, dass**
die Saugeinrichtungen (13) an der Aufnahmeplatte (10) in regelmäßig verteilter Anordnung vorgesehen sind.

8. Vorrichtung nach einem der vorangehenden Ansprüche,
**dadurch gekennzeichnet, dass**
die Saugeinrichtungen (13) symmetrisch zu wenigstens einer Symmetrieachse der Aufnahmeplatte (10) angeordnet sind.

9. Vorrichtung nach Anspruch 8,
**dadurch gekennzeichnet, dass**
symmetrisch an der Aufnahmeplatte (10) angeordnete Saugeinrichtungen (13) paarweise auf ein Ventil (16) des Ventilblocks (15) zusammengeschaltet sind.

10. Vorrichtung nach einem der Ansprüche 1 bis 9,
**dadurch gekennzeichnet, dass**
symmetrisch an der Aufnahmeplatte (10) angeordnete Saugeinrichtungen (13) gruppenweise auf ein Ventil (16) des Ventilblocks (15) zusammengeschaltet sind.

## Claims

1. Device for receiving plastics material plates of different sizes for transport and deposition in a vacuum shaping machine, comprising:
- a receiving plate (10), which has an arrangement of individual suction devices (13), a plurality of suction devices (13) being combined into suction groups, the individual suction devices (13) being actuable (15-19) in accordance with the format of the plastics material plate to be received,
**characterised in that**, in the central region of the receiving plate (10), nine suction devices (13) are arranged distributed regularly in a square of 3 suction devices (13) by 3 to form a suction group, and can be controlled jointly for a plastics material plate of a minimum size.

2. Device according to claim 1,
**characterised in that**
the suction devices (13) are connected to a valve block (15) in groups.

3. Device according to claim 2,
**characterised in that**
a control unit (18) is provided for switching valves (16) of the valve block (15).

4. Device according to claim 3,
**characterised in that**
the control unit (18) is connected to the valve block (15) via a bus power-on unit.

5. Device according to either claim 3 or claim 4,
**characterised in that**
groups of suction devices (13) are actuable simultaneously by the control unit (18).

6. Device according to any of the preceding claims,
**characterised in that**
the suction devices (13) provided for a minimum plastics material plate size are actuable simultaneously using a single valve (16) of the valve block (15).

7. Device according to any of the preceding claims,
**characterised in that**
the suction devices (13) are provided in a regularly distributed arrangement on the receiving plate (10).

8. Device according to any of the preceding claims,
**characterised in that**
the suction devices (13) are arranged symmetrically about at least one axis of symmetry of the receiving plate (10).

9. Device according to claim 8,
**characterised in that**
suction devices (13) arranged symmetrically on the receiving plate (10) are connected together in pairs to a valve (16) of the valve block (15).

10. Device according to any of claims 1 to 9,
**characterised in that**
suction devices (13) arranged symmetrically on the receiving plate (10) are connected together in groups to a valve (16) of the valve block (15).

## Revendications

1. Dispositif destiné à recevoir des plaques en matière plastique de différentes tailles pour le transport et la dépose dans une machine de formage sous vide, comprenant :
- une plaque de réception (10) qui présente un agencement de systèmes d'aspiration individuels (13), dans lequel plusieurs systèmes d'aspiration (13) sont réunis en groupes d'aspiration, les systèmes d'aspiration individuels (13) pouvant être actionnés (15-19) en fonction du format de la plaque en matière plastique à récevoir,
**caractérisé en ce qu'**au centre de la plaque de réception (10), neuf systèmes d'aspiration (13) sont régulièrement répartis pour former un groupe d'aspiration dans un carré de 3 par 3 systèmes d'aspiration (13) qui sont actionnables conjointement pour une plaque en matière plastique de taille minimale.

2. Dispositif selon la revendication 1,
**caractérisé en ce que** les systèmes d'aspiration (13) sont raccordés de manière groupée à une boîte à robinets (15).

3. Dispositif selon la revendication 2,
**caractérisé en ce que**, pour le raccordement des robinets (16) de la boîte à robinets (15), une unité de commande (18) est prévue.

4. Dispositif selon la revendication 3,
**caractérisé en ce que** l'unité de commande (18) est reliée à la boîte à robinets (15) par une connexion bus (19).

5. Dispositif selon la revendication 3 ou 4,
**caractérisé en ce que** l'unité de commande (18) permet d'actionner simultanément des groupes de systèmes d'aspiration (13).

6. Dispositif selon l'une quelconque des revendications précédentes,
**caractérisé en ce que** les systèmes d'aspiration (13) prévus pour une taille minimale de plaque en matière plastique sont actionnables à l'aide d'un seul robinet (16) de la boîte à robinets (15).

7. Dispositif selon l'une quelconque des revendications précédentes,
**caractérisé en ce que** les systèmes d'aspiration (13) sont prévus sur la plaque de soulèvement (10) selon un agencement régulièrement réparti.

8. Dispositif selon l'une quelconque des revendications précédentes,
**caractérisé en ce que** les systèmes d'aspiration (13) sont agencés symétriquement par rapport à au moins un axe de symétrie de la plaque de réception (10).

9. Dispositif selon la revendication 8,
**caractérisé en ce que** des systèmes d'aspiration (13) agencés symétriquement sur la plaque de réception (10) sont connectés par paire sur un robinet (16) de la boîte à robinets (15).

10. Dispositif selon l'une des revendications 1 à 9, **caractérisé en ce que**
des systèmes d'aspiration (13) agencés symétriquement sur la plaque de réception (10) sont raccordés de manière groupée sur un robinet (16) de la boîte à robinets (15).
